# EUROPÄISCHE PATENTSCHRIFT

(11) **EP 4 256 691 B1**
(45) Veröffentlichungstag und Bekanntmachung des Hinweises auf die Patenterteilung: **28.05.2025**
(21) Anmeldenummer: 21791362.3
(22) Anmeldetag: 14.10.2021
(51) Int. Cl.: H02H 3/02, H02H 7/08, H02H 7/09, H02P 6/08, H02P 6/34, H02P 21/08, H02P 23/12, H02P 29/024, H02P 29/032, H02P 3/22

(54) **VERFAHREN ZUM BETREIBEN EINER ELEKTRISCHEN MASCHINE, VORRICHTUNG ZUM BETREIBEN EINER ELEKTRISCHEN MASCHINE, ELEKTRISCHES ANTRIEBSSYSTEM**
METHOD FOR OPERATING AN ELECTRIC MACHINE, DEVICE FOR OPERATING AN ELECTRIC MACHINE, AND ELECTRIC DRIVE SYSTEM
PROCÉDÉ POUR FAIRE FONCTIONNER UNE MACHINE ÉLECTRIQUE, DISPOSITIF POUR FAIRE FONCTIONNER UNE MACHINE ÉLECTRIQUE ET SYSTÈME D'ENTRAÎNEMENT ÉLECTRIQUE

(30) Priorität: 01.12.2020 DE 102020215125
(43) Veröffentlichungstag der Anmeldung: 11.10.2023
(73) Patentinhaber: Robert Bosch GmbH, 70442 Stuttgart (DE)
(72) Erfinder: HIRSCH, Michele, 73730 Esslingen (DE); GOETTING, Gunther, 70499 Stuttgart (DE); WAGNER, Philipp, 71636 Ludwigsburg (DE)
(86) Internationale Anmeldenummer: PCT/EP2021/078434
(87) Internationale Veröffentlichungsnummer: WO 2022/117253

(56) Entgegenhaltungen:
- CN-A- 107 294 450
- DE-A1- 19 961 798
- US-A1- 2008 116 842

## Beschreibung

Die Erfindung betrifft ein Verfahren zum Betreiben einer elektrischen Maschine, die einen drehbar gelagerten Rotor und eine Motorwicklung aufweist, wobei die Motorwicklung durch eine Leistungselektronik elektrisch mit einem elektrischen Energiespeicher verbunden ist, wobei die Maschine und/oder eine die Maschine aufweisende Vorrichtung auf Fehlerfälle überwacht werden, und wobei die Motorwicklung bei Erfassen eines Fehlerfalls durch Ansteuern der Leistungselektronik kurzgeschlossen wird.

Außerdem betrifft die Erfindung eine Vorrichtung zum Betreiben einer elektrischen Maschine, mit einem Steuergerät.

Ferner betrifft die Erfindung ein elektrisches Antriebssystem.

### Stand der Technik

Die Druckschriften CN 107 294 450 A und US 2008/116842 A1 offenbaren Verfahren und Vorrichtungen zum Betreiben einer elektrischen Maschine. Eine elektrische Maschine weist in der Regel einen drehbar gelagerten Rotor und eine Motorwicklung auf. Der Rotor ist durch eine geeignete Bestromung von Phasen der Motorwicklung antreibbar beziehungsweise drehbar. Beispielsweise handelt es sich bei der Motorwicklung um eine gehäusefeste Statorwicklung, die um den Rotor verteilt angeordnet ist. Um eine gewünschte Bestromung der Motorwicklung beziehungsweise der Phasen der Motorwicklung zu erreichen, ist die Motorwicklung typischerweise durch eine Leistungselektronik elektrisch mit einem elektrischen Energiespeicher verbunden. Beispielsweise weist die Leistungselektronik für jede der Phasen der Motorwicklung jeweils eine andere Halbbrücke mit zwei Schaltelementen auf. Die Bestromung der Motorwicklung wird dann durch die Ansteuerung der Leistungselektronik geregelt beziehungsweise gesteuert.

Aus dem Stand der Technik ist es bekannt, die elektrische Maschine bei Vorliegen eines Fehlerfalls in einen sicheren Zustand zu überführen. Die Maschine und/oder eine die Maschine aufweisende Vorrichtung werden also auf Fehlerfälle überwacht und die Maschine wird bei Erfassen eines Fehlerfalls in den sicheren Zustand überführt. Beispielsweise wird als sicherer Zustand ein aktiver Kurzschluss (AKS) der Motorwicklung eingestellt. Insofern wird bei Erfassen eines Fehlerfalls die Motorwicklung durch Ansteuern der Leistungselektronik kurzgeschlossen. Dies wird beispielsweise dadurch erreicht, dass die Schaltelemente der Leistungselektronik derart angesteuert gesteuert werden, dass die Schaltelemente leitend schalten. Bei den Fehlerfällen kann es sich um Fehlerfälle der elektrischen Maschine selbst handeln, oder um Fehlerfälle der die elektrische Maschine aufweisenden Vorrichtung. Ist die Maschine beispielsweise Teil eines Kraftfahrzeugs, so kann es sich bei den Fehlerfällen auch um Fehlerfälle des Kraftfahrzeugs handeln. Mögliche Fehlerfälle sind beispielsweise Sensorfehler, Softwarefehler, Überspannungs-oder Überstromfehler, Defekte oder Teildefekte von Antriebsstrangkomponenten oder ein Unfall des Kraftfahrzeugs.

Dabei sind verschiedene Vorgehensweisen zum Kurzschließen der Motorwicklung bekannt. Beim sogenannten Hard-AKS wird die Motorwicklung aus dem aktuellen Ist-Arbeitspunkt aktiv kurzgeschlossen. Beim Hard-AKS entsteht in der Motorwicklung ein transienter Kurzschlussstrom, der derart hoch sein kann, dass es zu einer Entmagnetisierung von Permanentmagneten des Rotors kommt. Zur Verringerung des transienten Kurzschlussstroms kann ein Soft-AKS durchgeführt werden. Dabei wird ein Spannungsvektor sequentiell gekürzt bis die Nullspannung, also der aktive Kurzschluss, erreicht ist. Ein derartiges Verfahren ist beispielsweise in der Offenlegungsschrift WO 2015 090 754 A1 beschrieben. Aus der Offenlegungsschrift EP 3 545 617 A1 ist ein Verfahren zum Kurzschließen einer Motorwicklung bekannt, das in Abhängigkeit von einer Zwischenkreisspannung eines Zwischenkreiskondensators der Leistungselektronik durchgeführt wird.

### Offenbarung der Erfindung

Das erfindungsgemäße Verfahren zeichnet sich mit den Merkmalen des Anspruchs 1 dadurch aus, dass eine Soll-Trajektorie für einen Ist-Stromvektor eines durch die Motorwicklung fließenden elektrischen Motorstroms ermittelt wird, wobei die Soll-Trajektorie von einem aktuellen Ist-Arbeitspunkt der Maschine zu einem Kurzschluss-Arbeitspunkt der Maschine verläuft, wobei in Abhängigkeit von der Soll-Trajektorie eine Vorsteuerung prädiziert wird, und wobei die Leistungselektronik zum Kurzschließen der Motorwicklung derart in Abhängigkeit von der Vorsteuerung angesteuert wird, dass ein Verlauf des Ist-Stromvektors beim Kurzschließen der Motorwicklung zumindest im Wesentlichen der Soll-Trajektorie entspricht. Unter dem Motorstrom ist dabei die Gesamtheit der durch die Phasen der Motorwicklung fließenden elektrischen Phasenströme zu verstehen. Insofern beschreibt der Stromvektor die elektrischen Phasenströme. Vorzugsweise beschreibt der Stromvektor die Phasenströme bezogen auf ein rotorfestes Koordinatensystem. Ein drehmomentbildender Strom iq bildet dabei eine erste Richtungskomponente des Stromvektors. Ein flussbildender Strom id bildet eine zweite Richtungskomponente des Stromvektors. Unter dem Kurzschluss-Arbeitspunkt der elektrischen Maschine ist der Arbeitspunkt zu verstehen, den die Maschine einnimmt, wenn die Motorwicklung kurzgeschlossen ist. Jeder Arbeitspunkt der elektrischen Maschine korrespondiert mit einem jeweils anderen Stromvektor. Erfindungsgemäß ist vorgesehen, dass eine Soll-Trajektorie ermittelt wird, die von dem aktuellen Ist-Arbeitspunkt zu dem Kurzschluss-Arbeitspunkt verläuft. In Abhängigkeit von der Soll-Trajektorie wird eine Vorsteuerung prädiziert und die Leistungselektronik wird derart in Abhängigkeit von der Vorsteuerung angesteuert, dass der Verlauf des Ist-Stromvektors beim Kurzschließen der Motorwicklung zumindest im Wesentlichen der Soll-Trajektorie entspricht. Durch das Ermitteln der Soll-Trajektorie und die entsprechende Ansteuerung der Leistungselektronik kann ein gewünschter Übergang der elektrischen Maschine ausgehend von dem aktuellen Ist-Arbeitspunkt in den Kurzschluss-Arbeitspunkt besonders präzise vorgegeben werden. Beispielsweise kann erreicht werden, dass der Kurzschluss-Arbeitspunkt zeitoptimiert und mit geringem transienten Kurzschlussstrom eingestellt wird. Vorzugsweise wird die Soll-Trajektorie derart ermittelt, dass der Übergang aus dem Ist-Arbeitspunkt in den Kurzschluss-Arbeitspunkt zumindest im Wesentlichen zeitoptimiert erfolgt. Vorzugsweise wird als Vorsteuerung eine mehrere Soll-Spannungsvektoren aufweisende Steuerfolge prädiziert. Um die Leistungselektronik in Abhängigkeit von der Vorsteuerung anzusteuern, werden dann in Abhängigkeit von der Steuerfolge mehrere Ansteuersignale für die Leistungselektronik ermittelt und die Leistungselektronik wird in Abhängigkeit von den Ansteuersignalen angesteuert.

Gemäß einer bevorzugten Ausführungsform ist vorgesehen, dass die Soll-Trajektorie in Abhängigkeit von dem aktuellen Ist-Arbeitspunkt im Betrieb der elektrischen Maschine ermittelt wird. Die Vorsteuerung wird also in Abhängigkeit von dem aktuellen Ist-Arbeitspunkt "online" ermittelt. Daraus ergibt sich der Vorteil, dass für beliebige aktuelle Ist-Arbeitspunkte eine geeignete Soll-Trajektorie ermittelt werden kann. Entsprechend kann ausgehend von beliebigen aktuellen Ist-Arbeitspunkten der Kurzschluss Arbeitspunkt entlang der Soll-Trajektorie eingestellt werden. Wird die Soll-Trajektorie im Betrieb der elektrischen Maschine ermittelt, so wird auch die Vorsteuerung im Betrieb der elektrischen Maschine prädiziert. Vorzugsweise wird die im Betrieb der elektrischen Maschine prädizierte Vorsteuerung für eine vorgegebene Zeitdauer, also vorübergehend, zwischengespeichert, sodass die prädizierte Vorsteuerung für die vorgegebene Zeitdauer zur Verfügung steht und der Ansteuerung der Leistungselektronik zugrunde gelegt werden kann.

Vorzugsweise wird die Soll-Trajektorie in Vorversuchen ermittelt. Die Soll-Trajektorie wird also "offline", beispielsweise bei der Applikation der elektrischen Maschine im Werk, ermittelt. Entsprechend muss die Soll-Trajektorie im Betrieb der elektrischen Maschine nicht erst ermittelt werden. Daraus ergibt sich der Vorteil, dass in einem Steuergerät, das dazu ausgebildet ist, die Ansteuersignale für die Leistungselektronik zu ermitteln, keine Rechenkapazität für das Ermitteln der Soll-Trajektorie vorgehalten werden muss. Zudem ergibt sich der Vorteil, dass die Vorsteuerung besonders schnell zur Verfügung steht, verglichen mit dem Ermitteln der Soll-Trajektorie im Betrieb der elektrischen Maschine. Wird die Soll-Trajektorie in Vorversuchen ermittelt, so wird vorzugsweise auch die Vorsteuerung in den Vorversuchen prädiziert. Die Vorsteuerung wird dann in einem der elektrischen Maschine zugeordneten Datenspeicher gespeichert. Alternativ dazu werden vorzugsweise auch die Ansteuersignale in den Vorversuchen ermittelt, wobei dann die Ansteuersignale in dem Datenspeicher gespeichert werden.

Vorzugsweise wird für mehrere potentielle Ist-Arbeitspunkte jeweils eine Soll-Trajektorie ermittelt. Es werden also mehrere potentielle Ist-Arbeitspunkte vorgegeben und für diese Ist-Arbeitspunkte wird jeweils eine Soll-Trajektorie ermittelt. Dies ist besonders vorteilhaft, wenn die Soll-Trajektorien in Vorversuchen ermittelt werden. Beispielsweise werden mehrere potentielle Ist-Arbeitspunkte vorgegeben, die jeweils auf einer MTPA-Kennlinie (Maximum Torque Per Ampere) der elektrischen Maschine liegen, und es wird für diese Ist-Arbeitspunkte jeweils eine Soll-Trajektorie ermittelt. Wird für mehrere Ist-Arbeitspunkte jeweils eine Soll-Trajektorie ermittelt, so wird vorzugsweise auch für jede der Soll-Trajektorien jeweils eine Vorsteuerung prädiziert. Diese mehreren Vorsteuerungen werden dann in dem Datenspeicher gespeichert, besonders bevorzugt in einem Kennfeld. Alternativ dazu werden vorzugsweise die in Abhängigkeit von den mehreren Vorsteuerungen ermittelten Ansteuersignale in dem Kennfeld gespeichert.

Vorzugsweise wird die Soll-Trajektorie in Abhängigkeit von einem Modell der elektrischen Maschine ermittelt. Es wird also die Eigendynamik der elektrischen Maschine beim Ermitteln der Soll-Trajektorie berücksichtigt. Das Modell der elektrischen Maschine beschreibt insbesondere den Zusammenhang zwischen den an den Phasen der Motorwicklung anliegenden elektrischen Klemmenspannungen einerseits und den durch die Klemmenspannungen bewirkten Phasenströmen andererseits. Beispielsweise enthält das Modell Informationen bezüglich der Induktivitäten sowie der elektrischen Widerstände der Maschine.

Gemäß einer bevorzugten Ausführungsform ist vorgesehen, dass ein Schwellen-Stromwert vorgegeben wird, wobei die Soll-Trajektorie derart in Abhängigkeit von dem Schwellen-Stromwert ermittelt wird, dass ein Stromwert des Ist-Stromvektors beim Kurzschließen der Motorwicklung den Schwellen-Stromwert stets unterschreitet. Stromwerte, die den Schwellen-Stromwert übersteigen werden demnach vermieden. Derart hohe Stromwerte könnten zu einer Entmagnetisierung der Permanentmagnete des Rotors führen und sind entsprechend unerwünscht.

Vorzugsweise wird ein Schwellen-Spannungswert vorgegeben, wobei die Soll-Trajektorie derart in Abhängigkeit von dem Schwellen-Spannungswert ermittelt wird, dass Spannungswerte der elektrischen Klemmenspannungen der Maschine beim Kurzschließen der Motorwicklung den Schwellen-Spannungswert stets unterschreiten. Auch hierdurch wird eine Überlastung der elektrischen Maschine beim Kurzschließen vermieden.

Gemäß einer bevorzugten Ausführungsform ist vorgesehen, dass die Soll-Trajektorie in Abhängigkeit von einer Zwischenkreisspannung eines Zwischenkreises der Leistungselektronik ermittelt wird. Durch das Berücksichtigen der Zwischenkreisspannung kann der Zwischenkreis beziehungsweise ein Zwischenkreiskondensator des Zwischenkreises beim Kurzschließen der Motorwicklung vor Überspannungen geschützt werden. Insbesondere wird beim Kurzschließen eine elektrische Verbindung des Energiespeichers mit der Leistungselektronik unterbrochen. Dies wird als Lastabwurf bezeichnet. Der Energiespeicher hat dann keine ladungsausgleichende Wirkung mehr auf den Zwischenkreis. Durch die Berücksichtigung der Zwischenkreisspannung beim Ermitteln der Soll-Trajektorie kann erreicht werden, dass der Zwischenkreiskondensator beziehungsweise der Zwischenkreis dennoch vor Überspannungen geschützt ist.

Vorzugsweise wird eine Spannungsschwelle für die Zwischenkreisspannung vorgegeben, wobei die Soll-Trajektorie derart in Abhängigkeit von der Spannungsschwelle ermittelt wird, dass die Zwischenkreisspannung beim Kurzschließen der Motorwicklung die Spannungsschwelle stets unterschreitet. Dadurch werden die Spannungsschwelle übersteigende Überspannungen vermieden.

Gemäß einer bevorzugten Ausführungsform ist vorgesehen, dass eine Soll-Spannung für die Zwischenkreisspannung vorgegeben wird, wobei die Soll-Trajektorie derart in Abhängigkeit von der Soll-Spannung ermittelt wird, dass die Zwischenkreisspannung bei Erreichen des Kurzschluss-Arbeitspunktes der Soll-Spannung entspricht. Zweckmäßigerweise wird als Soll-Spannung eine elektrische Spannung vorgegeben, durch die der Zwischenkreis nicht beschädigt wird. Beispielsweise wird als Soll-Spannung die Nennspannung des Zwischenkreiskondensators vorgegeben. Damit bei Erreichen des Kurzschluss-Arbeitspunktes die Zwischenkreisspannung der Soll-Spannung entspricht, wird die Soll-Trajektorie insbesondere derart ermittelt beziehungsweise gewählt, dass der Zwischenkreis beim Kurzschließen der Motorwicklung zumindest zeitweise entladen wird.

Gemäß einer bevorzugten Ausführungsform ist vorgesehen, dass die Soll-Trajektorie durch einen modellprädiktiven Regler ermittelt wird. Modellprädiktive Regelung ist aus dem Stand der Technik grundsätzlich bekannt und wird auch als Model Predictive Control (MPC) bezeichnet. Durch den modellprädiktiven Regler ist eine Soll-Trajektorie, die einen zeitoptimierten Übergang von dem Ist-Arbeitspunkt in den Kurzschluss-Arbeitspunkt beschreibt, präzise ermittelbar, sodass durch die in Abhängigkeit von der Soll-Trajektorie prädizierte Vorsteuerung eine zumindest im Wesentlichen zeitoptimierte Einstellung des Kurzschluss Arbeitspunktes erreicht wird. Vorzugsweise ermittelt der modellprädiktive Regler die Soll-Trajektorie in Abhängigkeit von dem Modell der Maschine, dem vorgegebenen Schwellen-Stromwert und dem vorgegebenen Schwellen-Spannungswert. Besonders bevorzugt berücksichtigt der modellprädiktive Regler beim Ermitteln der Soll-Trajektorie auch die Zwischenkreisspannung des Zwischenkreises, beispielsweise in Form der Spannungsschwelle und/oder der Soll-Spannung. Vorzugsweise wird die Vorsteuerung durch den modellprädiktiven Regler prädiziert.

Gemäß einer bevorzugten Ausführungsform ist vorgesehen, dass ein Sensorsignal zumindest eines Sensors mit einem vorgegebenen Grenzwert verglichen wird, und dass der Fehlerfall in Abhängigkeit von dem Vergleich erfasst wird. Beispielsweise wird erkannt, dass der Fehlerfall vorliegt, wenn das Sensorsignal den Grenzwert übersteigt, oder wenn das Sensorsignal den Grenzwert unterschreitet. Dabei wird dem Vergleich zweckmäßigerweise das Sensorsignal eines Sensors zugrunde gelegt, in dem zumindest einer der potentiellen Fehlerfälle bei Auftreten des Fehlerfalls ersichtlich ist. Beispielsweise handelt es sich bei dem Fehlerfall um einen Defekt oder Teildefekt einer Komponente der elektrischen Maschine. Derartige Defekte bewirken beispielsweise Überströme und/oder Überspannungen in der Leistungselektronik und/oder der Motorwicklung. Entsprechend wird dem Vergleich vorzugsweise das Sensorsignal eines Sensors zugrunde gelegt, der dazu ausgebildet ist, die Leistungselektronik und/oder die Motorwicklung zu überwachen. Bei dem Fehlerfall kann es sich aber auch um einen Unfall des Kraftfahrzeugs handeln. Entsprechend wird dem Vergleich vorzugsweise das Sensorsignal eines karosseriefest angeordneten Beschleunigungssensors zugrunde gelegt. Vorzugsweise werden die Sensorsignale verschiedener Sensoren mit jeweils unterschiedlichen Grenzwerten verglichen.

Gemäß einer bevorzugten Ausführungsform ist vorgesehen, dass die elektrische Maschine bei Erfassen des Fehlerfalls in Abhängigkeit von der Vorsteuerung in den Kurzschluss-Arbeitspunkt gesteuert wird. Die Motorwicklung wird also ungeregelt in Abhängigkeit von der Vorsteuerung kurzgeschlossen. Auf eine Anpassung des Kurzschließens an ein Sensorsignal einer Kontrolleinrichtung wird vorzugsweise verzichtet. Unter einer Kontrolleinrichtung ist dabei eine Einrichtung zu verstehen, deren Sensorsignal im Normalbetrieb der Maschine bei der Regelung der Maschine berücksichtigt wird. Beispielsweise handelt es sich bei einem dem Rotor zugeordneten Drehwinkelsensor, einem der Leistungselektronik oder der Motorwicklung zugeordneten Stromsensor und einem der Motorwicklung zugeordneten Spannungssensor um derartige Kontrolleinrichtungen. Es ergibt sich daraus der Vorteil, dass der Verlauf des Ist-Stromvektors beim Kurzschließen selbst dann der gewünschten Soll-Trajektorie entspricht, wenn der Fehlerfall eine oder mehrere der Kontrolleinrichtungen betrifft.

Die erfindungsgemäße Vorrichtung zum Betreiben einer elektrischen Maschine, die einen drehbar gelagerten Rotor und eine Motorwicklung aufweist, wobei die Motorwicklung durch eine Leistungselektronik elektrisch mit einem elektrischen Energiespeicher verbunden ist, zeichnet sich mit den Merkmalen des Anspruchs 14 durch ein Steuergerät aus, das speziell dazu hergerichtet ist, bei bestimmungsgemäßem Gebrauch das erfindungsgemäße Verfahren durchzuführen. Wird das Steuergerät bestimmungsgemäß verwendet, so wird also das erfindungsgemäße Verfahren in dem Steuergerät beziehungsweise durch das Steuergerät durchgeführt. Auch daraus ergeben sich die bereits genannten Vorteile. Weitere bevorzugte Merkmale und Merkmalskombinationen ergeben sich aus der Beschreibung sowie aus den Ansprüchen. Vorzugsweise ist das Steuergerät als Mikrocontroller ausgebildet.

Das erfindungsgemäße elektrische Antriebssystem weist eine elektrische Maschine auf, die einen drehbar gelagerten Rotor und eine Motorwicklung aufweist, wobei die Motorwicklung durch eine Leistungselektronik elektrisch mit einem elektrischen Energiespeicher verbunden ist. Das Antriebssystem zeichnet sich mit den Merkmalen des Anspruchs 15 durch die erfindungsgemäße Vorrichtung zum Betreiben der elektrischen Maschine aus. Auch daraus ergeben sich die bereits genannten Vorteile. Weitere bevorzugte Merkmale und Merkmalskombinationen ergeben sich aus der Beschreibung sowie aus den Ansprüchen.

Im Folgenden wird die Erfindung anhand der Zeichnungen näher erläutert. Dazu zeigen
- Figur 1: ein elektrisches Antriebssystem,
- Figur 2: ein Verfahren zum Betreiben einer elektrischen Maschine des Antriebssystems,
- Figur 3: eine erste Soll-Trajektorie,
- Figur 4: Strom- und Spannungsverläufe beim Kurzschließen einer Motowicklung der elektrischen Maschine gemäß der ersten Soll-Trajektorie,
- Figur 5: eine zweite Soll-Trajektorie und
- Figur 6: einen Stromverlauf und einen Spannungsverlauf beim Kurzschließen der Motorwicklung gemäß der zweiten Soll-Trajektorie.

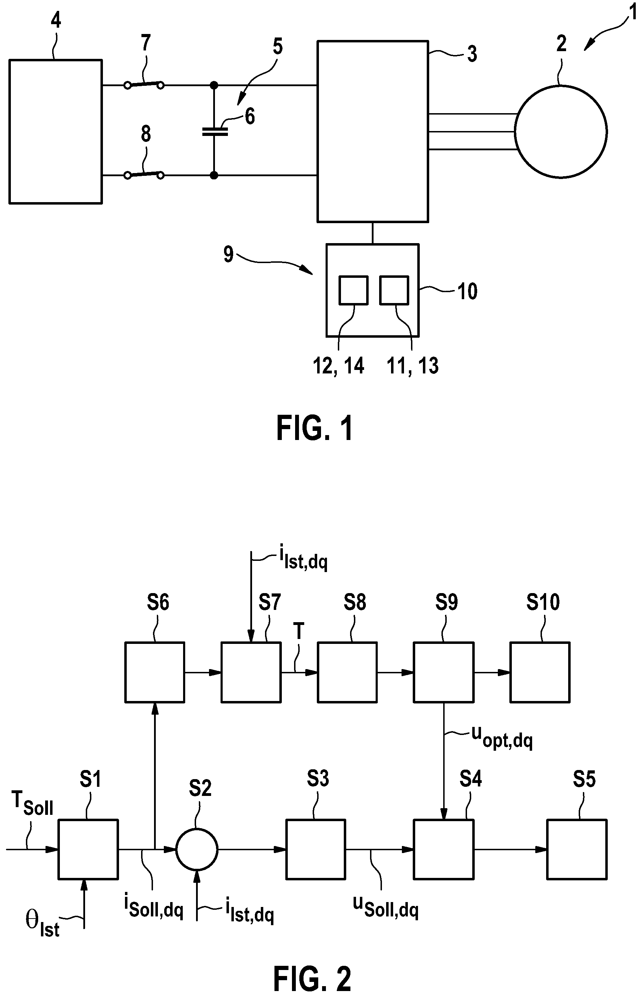

Figur 1 zeigt in einer schematischen Darstellung ein elektrisches Antriebssystem 1 eines nicht näher dargestellten Kraftfahrzeugs.

Das Antriebssystem 1 weist eine elektrische Maschine 2 auf. Die elektrische Maschine 2 weist einen drehbar gelagerten Rotor auf. Außerdem weist die elektrische Maschine 2 als Motorwicklung eine Statorwicklung auf. Die Statorwicklung ist derart verteilt um den Rotor angeordnet, dass der Rotor durch eine geeignete Bestromung der Statorwicklung drehbar ist. Vorliegend weist die Statorwicklung drei Phasen auf.

Das Antriebssystem 1 weist außerdem eine mehrere Schaltelemente aufweisende Leistungselektronik 3 auf. Beispielsweise weist die Leistungselektronik 3 eine der Anzahl an Phasen entsprechende Anzahl an Halbbrücken auf, wobei jede der Halbbrücken jeweils zwei Schaltelemente aufweist. Die Leistungselektronik 3 weist außerdem einen elektrischen Zwischenkreis 5 mit einem Zwischenkreiskondensator 6 auf.

Die Statorwicklung ist durch die Leistungselektronik 3 mit einem elektrischen Energiespeicher 4 des Antriebssystems 1 elektrisch verbunden.

Dem Energiespeicher 4 sind zwei Batterieschütze 7 und 8 zugeordnet. Durch die Batterieschütze 7 und 8 ist eine elektrische Verbindung zwischen der Leistungselektronik 3 und dem Energiespeicher 4 wahlweise herstellbar oder unterbrechbar.

Das Antriebssystem 1 weist außerdem eine Vorrichtung 9 mit einem Steuergerät 10 auf. Vorliegend handelt sich bei dem Steuergerät 10 um einen Mikrocontroller 10. Das Steuergerät 10 ist dazu ausgebildet, die Schaltelemente der Leistungselektronik 3 anzusteuern, um eine gewünschte Bestromung der Phasen der Statorwicklung zu erreichen.

Das Steuergerät 10 weist eine erste Recheneinheit 11 und eine zweite Recheneinheit 12 auf. Die erste Recheneinheit 11 weist einen Stromregler 13 auf. Die zweite Recheneinheit 12 weist einen modellprädiktiven Regler 14 auf. Das Steuergerät 10 ist dazu ausgebildet, mittels der Regler 13 und 14 Ansteuersignale für die Schaltelemente der Leistungselektronik 3 zu ermitteln und die Schaltelemente in Abhängigkeit von den ermittelten Ansteuersignalen anzusteuern, wie im Folgenden mit Bezug auf Figur 2 näher erläutert wird.

Figur 2 zeigt ein vorteilhaftes Verfahren zum Betreiben der elektrischen Maschine 2 anhand eines Flussdiagramms.

In einem ersten Schritt S1 ermittelt das Steuergerät 10 in Abhängigkeit von einem vorgegeben Soll-Drehmoment T_{Soll} einerseits und einem Ist-Drehwinkel Θ_{Ist} des Rotors andererseits einen Soll-Stromvektor i_{Soll,dq}. Das Soll-Drehmoment T_{Soll} wird dabei beispielsweise in Abhängigkeit von einer Betätigung eines Beschleunigungspedals des Kraftfahrzeugs vorgegeben. Der Ist-Drehwinkel Θ_{Ist} wird beispielsweise durch einen dem Rotor zugeordneten Drehwinkelsensor erfasst. Unter dem Soll-Stromvektor i_{Soll,dq} ist ein Stromvektor bezogen auf ein rotorfestes Koordinatensystem zu verstehen. Dabei beschreibt der Stromvektor den Stromwert eines drehmomentbildenden Stroms i_{q} einerseits und den Stromwert eines flussbildenden Stroms i_{d} andererseits. Der Stromvektor entspricht einem Arbeitspunkt der elektrischen Maschine. Der Soll-Stromvektor i_{Soll,dq} der elektrischen Maschine 2 ist insofern der Soll-Arbeitspunkt der elektrischen Maschine 2.

In einem zweiten Schritt S2 ermittelt das Steuergerät 10 eine Differenz zwischen dem Soll-Stromvektor i_{Soll,dq} einerseits und einem ermittelten Ist-Stromvektor i_{Ist,dq} andererseits. Der Ist-Stromvektor i_{Ist,dq} wird beispielsweise in Abhängigkeit von den durch die Phasen der Motorwicklung fließenden Ist-Phasenströmen mittels einer d/q-Transformation ermittelt. Der Ist-Stromvektor i_{Ist,dq} entspricht einem aktuellen Ist-Arbeitspunkt der elektrischen Maschine 2.

In einem dritten Schritt S3 ermittelt das Steuergerät 10 mittels des Stromreglers 13 einen auf das rotorfeste Koordinatensystem bezogenen Soll-Spannungsvektor u_{Soll,dq}. Der Soll-Spannungsvektor u_{Soll,dq} beschreibt Klemmenspannungen, die an den Phasen der Statorwicklung anzulegen sind, damit die Differenz zwischen dem Soll-Stromvektor i_{Soll,dq} und dem Ist-Stromvektor i_{Ist,dq} verringert wird.

In einem vierten Schritt S4 ermittelt das Steuergerät 10 in Abhängigkeit von dem Soll-Spannungsvektor u_{Soll,dq} Ansteuersignale für die Schaltelemente der Leistungselektronik 3.

In einem fünften Schritt S5 steuert das Steuergerät 10 die Schaltelemente in Abhängigkeit von den in dem Schritt S4 ermittelten Ansteuersignalen an.

Die Schritte S1 bis S5 werden im Normalbetrieb der elektrischen Maschine 2 laufend durchgeführt, sodass mittels der Schritte S1 bis S5 eine feldorientierte Regelung der elektrischen Maschine 2 stattfindet.

In einem sechsten Schritt S6 werden ein Schwellen-Stromwert für den Ist-Stromvektor i_{Ist,dq} sowie ein Schwellen-Spanungswert für die Klemmenspannungen vorgegeben.

In einem siebten Schritt S7 ermittelt das Steuergerät 10 mittels des modellprädiktiven Reglers 14 eine Soll-Trajektorie für den Ist-Stromvektor i_{Ist,dq}, wobei die Soll-Trajektorie von dem aktuellen Ist-Arbeitspunkt der Maschine 2 zu einem Kurzschluss-Arbeitspunkt der Maschine 2 verläuft. Bei dem Kurzschluss-Arbeitspunkt handelt es sich um den Arbeitspunkt der Maschine 2, den die Maschine 2 einnimmt, wenn die Phasen der Motorwicklung kurzgeschlossen sind.

Der modellprädiktive Regler 14 ermittelt die Soll-Trajektorie dabei derart, dass durch eine Änderung des Ist-Stromvektors i_{Ist,dq} entlang der Soll-Trajektorie eine zeitoptimierte Einstellung des Kurzschluss-Arbeitspunktes ausgehend von dem aktuellen Ist-Arbeitspunkt erreicht wird. Hierzu ermittelt der modellprädiktive Regler 14 die Soll-Trajektorie in Abhängigkeit von einem Modell der elektrischen Maschine 2.

Der modellprädiktive Regler 14 berücksichtigt beim Ermitteln der Soll-Trajektorie außerdem den vorgegebenen Schwellen-Stromwert. Hierzu ermittelt der modellprädiktive Regler 14 die Soll-Trajektorie derart, dass der Ist-Stromvektor i_{Ist,dq} beim Einstellen des Kurzschluss-Arbeitspunktes, also beim Kurzschließen der Motorwicklung, entlang der Soll-Trajektorie den Schwellen-Stromwert stets unterschreitet.

Der modellprädiktive Regler 14 berücksichtigt beim Ermitteln der Soll-Trajektorie außerdem den vorgegebenen Schwellen-Spannungswert. Hierzu ermittelt der modellprädiktive Regler 14 die Soll-Trajektorie derart, dass die Klemmenspannungen beim Einstellen des Kurzschluss-Arbeitspunktes entlang der Soll-Trajektorie den Schwellen-Spannungswert stets unterschreiten.

In einem achten Schritt S8 prädiziert der modellprädiktive Regler 14 in Abhängigkeit von der ermittelten Soll-Trajektorie eine Vorsteuerung. Vorliegend prädiziert der modellprädiktive Regler 14 als Vorsteuerung eine Steuerfolge, die mehrere auf das rotorfeste Koordinatensystem bezogene, optimierte Spannungsvektoren u_{opt,dq} aufweist. Werden die Phasen sequentiell gemäß den Spannungsvektoren u_{opt,dq} mit elektrischen Klemmenspannungen beaufschlagt, so wird ausgehend von dem aktuellen Ist-Arbeitspunkt der Maschine 2 der Kurzschluss-Arbeitspunkt der Maschine 2 derart eingestellt, dass der Verlauf des Ist-Stromvektors i_{Ist,dq} zumindest im Wesentlichen der Soll-Trajektorie entspricht.

Die Schritte S6 bis S8 werden laufend durchgeführt, sodass für jeweils aktuelle Ist-Arbeitspunkte der Maschine 2 stets eine Soll-Trajektorie ermittelt und eine Vorsteuerung prädiziert werden.

In einem neunten Schritt S9 werden das Kraftfahrzeug und die elektrische Maschine 2 auf Fehlerfälle überwacht. Wird in dem Schritt S9 ein Fehlerfall erfasst, so werden die Ansteuersignale in dem Schritt S4 in Abhängigkeit von der prädizierten Vorsteuerung ermittelt. Die Berücksichtigung des Soll-Spannungsvektors u_{Soll,dq} wird ausgesetzt. Entsprechend werden in dem Schritt S5 die Schaltelemente dann in Abhängigkeit von Ansteuersignalen angesteuert, die in Abhängigkeit von der prädizierten Vorsteuerung ermittelt wurden. Hierdurch wird der Kurzschluss-Arbeitspunkt zeitoptimiert und ohne Überlastung der Leistungselektronik 3 sowie der Motorwicklung eingestellt.

Optional wird bei Erfassen eines Fehlerfalls in einem zehnten Schritt S10 der Energiespeicher 4 elektrisch von der Leistungselektronik 3 getrennt. Hierzu werden das Batterieschütz 7 und/oder das Batterieschütz 8 nichtleitend geschaltet.

Wird der optionale Schritt S10 durchgeführt, so werden in dem sechsten Schritt S6 vorzugsweise auch eine Spannungsschwelle für eine Zwischenkreisspannung des Zwischenkreises 5 sowie eine Soll-Spannung für die Zwischenkreisspannung vorgegeben.

Der modellprädiktive Regler 14 berücksichtigt beim Ermitteln der Soll-Trajektorie dann auch die vorgegebene Spannungsschwelle. Hierzu ermittelt der modellprädiktive Regler 14 die Soll-Trajektorie derart, dass die Zwischenkreisspannung beim Einstellen des Kurzschluss-Arbeitspunktes entlang der Soll-Trajektorie die Spannungsschwelle stets unterschreitet.

Zudem berücksichtigt der modellprädiktive Regler 14 beim Ermitteln der Soll-Trajektorie auch die vorgegebene Soll-Spannung. Hierzu ermittelt der modellprädiktive Regler 14 die Soll-Trajektorie derart, dass die Zwischenkreisspannung bei Erreichen des Kurzschluss-Arbeitspunktes der Soll-Spannung entspricht.

Gemäß einem weiteren Ausführungsbeispiel wird die Soll-Trajektorie in Vorversuchen ermittelt und die Vorsteuerung wird in Vorversuchen prädiziert. In diesem Fall wird die Vorsteuerung dann in einem der Maschine 2 zugeordneten Datenspeicher gespeichert. Wird in diesem Ausführungsbeispiel ein Fehlerfall erfasst, so wird die Vorsteuerung nicht gemäß den Verfahrensschritten S7 und S8 prädiziert, sondern durch den Datenspeicher bereitgestellt. Gemäß einem weiteren Ausführungsbeispiel werden in den Vorversuchen bereits die Ansteuersignale für die Schaltelemente ermittelt und anstelle der Vorsteuerung in dem Datenspeicher gespeichert. Vorzugsweise werden für mehrere potentielle Ist-Arbeitspunkte jeweils eine Soll-Trajektorie ermittelt und eine Vorsteuerung prädiziert, wobei die Vorsteuerungen oder die Ansteuersignale dann vorzugsweise in einem Kennfeld gespeichert werden.

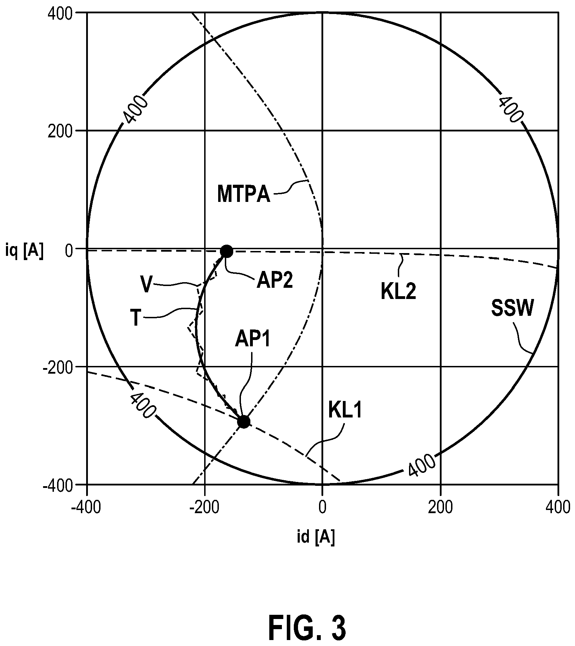

Figur 3 zeigt eine Strom-Ortskurve, in der eine erste Soll-Trajektorie T dargestellt ist. Eine Spannungsschwelle für die Zwischenkreisspannung sowie eine Soll-Spannung für die Zwischenkreisspannung wurden beim Ermitteln dieser ersten Soll-Trajektorie T nicht berücksichtigt.

Wie aus Figur 3 ersichtlich ist, beträgt der Schwellen-Stromwert SSW vorliegend 400 Ampere. Der aktuelle Ist-Arbeitspunkt AP1 entspricht einem Schnittpunkt einer ersten ISO-Drehmoment-Kennlinie KL1 mit der MTPA-Kurve. Dabei befindet sich der aktuelle Ist-Arbeitspunkt AP1 im dritten Quadranten der Strom-Ortskurve. Die Maschine 2 wird demnach aktuell generatorisch betrieben. Der Kurzschluss-Arbeitspunkt AP2 liegt auf einer zweiten ISO-Drehmoment-Kennlinie KL2. Der Verlauf V des Ist-Stromvektors i_{Ist,dq} entspricht beim Einstellen des Kurzschluss-Arbeitspunktes AP2 in Abhängigkeit von der Vorsteuerung im Wesentlichen der Soll-Trajektorie T.

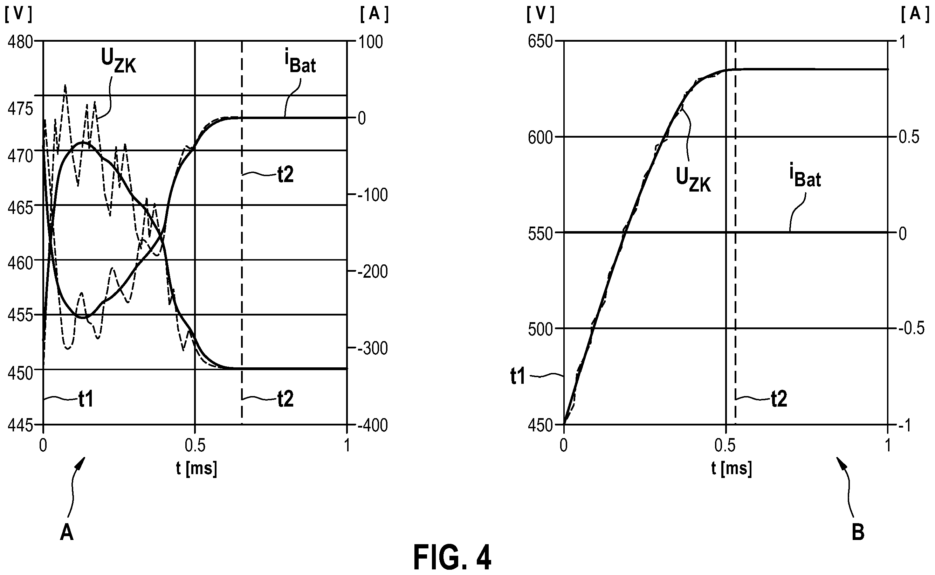

In Figur 4 sind eine linke Abbildung A und eine rechte Abbildung B dargestellt. In beiden Abbildungen A und B sind jeweils der Verlauf der Zwischenkreisspannung U_{ZK} und der Verlauf eines Batteriestroms i_{Bat} beim Einstellen des Kurzschluss-Arbeitspunktes AP2 gemäß der ersten Soll-Trajektorie T dargestellt. Dabei ist im Falle der linken Abbildung A der Energiespeicher 4 elektrisch mit der Leistungselektronik 3 verbunden. Im Falle der rechten Abbildung B ist der Energiespeicher 4 elektrisch von der Leistungselektronik 3 getrennt.

Zu einem ersten Zeitpunkt t1 wird das Einstellen des Kurzschluss-Arbeitspunktes AP2 gestartet. Die Schaltelemente der Leistungselektronik 3 werden also ab dem ersten Zeitpunkt t1 in Abhängigkeit von der prädizierten Vorsteuerung angesteuert. Zu einem zweiten Zeitpunkt t2 wird der Kurzschluss-Arbeitspunkt AP2 erreicht. Die Zwischenkreisspannung U_{ZK} und der Batteriestrom i_{Bat} sind ab diesem Zeitpunkt zumindest im Wesentlichen konstant. Wie aus den Abbildungen A und B ersichtlich ist, wird zum Einstellen des Kurzschluss-Arbeitspunktes AP2 lediglich eine Zeitdauer von etwa 500 µs bis 700 µs benötigt.

Wie aus Abbildung A ersichtlich ist, steigt die Zwischenkreisspannung U_{ZK} beim Kurzschließen lediglich um etwa 25 V an, weil Ladungsträger bei steigender Zwischenkreisspannung U_{ZK} in Form des Batteriestroms i_{Bat} dem Energiespeicher 4 zugeführt werden. Ist der Energiespeicher 4 elektrisch mit der Leistungselektronik 3 verbunden, so kann demnach gemäß der ersten Soll-Trajektorie T der Kurzschluss-Arbeitspunkt AP2 schnell und ohne Überlastung des Zwischenkreises 5 eingestellt werden.

Wie aus Abbildung B ersichtlich ist, steigt die Zwischenkreisspannung U_{ZK} bei elektrisch von dem Zwischenkreis 5 getrenntem Energiespeicher 4 deutlich weiter an, als bei elektrisch mit dem Zwischenkreis 5 verbundenen Energiespeicher 4.

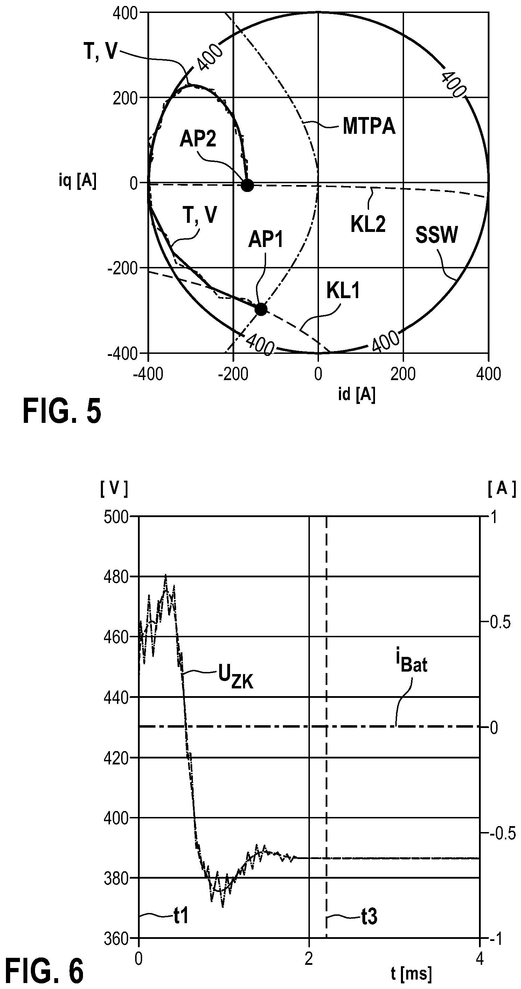

Figur 5 zeigt eine Strom-Ortskurve, in der eine zweite Soll-Trajektorie T dargestellt ist. Die Spannungsschwelle für die Zwischenkreisspannung U_{ZK} sowie die Soll-Spannung für die Zwischenkreisspannung U_{ZK} wurden beim Ermitteln der zweiten Soll-Trajektorie T durch den modellprädiktiven Regler 14 berücksichtigt. Vorliegend wurden eine Spannungsschwelle von 480 V sowie eine Soll-Spannung von 385 V vorgegeben.

Wie aus Figur 5 ersichtlich ist, verläuft die zweite Soll-Trajektorie T ausgehend von dem Ist-Arbeitspunkt AP1 zunächst in den zweiten Quadranten der Strom-Ortskurve. Hierdurch wird beim Einstellen des Kurzschluss-Arbeitspunktes AP2 eine Verringerung der Zwischenkreisspannung U_{ZK} erreicht.

In Figur 6 sind der Verlauf der Zwischenkreisspannung U_{ZK} und der Verlauf des Batteriestroms i_{Bat} beim Einstellen des Kurzschluss-Arbeitspunktes AP2 gemäß der zweiten Soll-Trajektorie T dargestellt. Der Energiespeicher 4 ist dabei elektrisch von der Leistungselektronik 3 getrennt. Wie aus Figur 6 ersichtlich ist, steigt die Zwischenkreisspannung U_{ZK} dennoch lediglich vorübergehend auf etwa 480 V an und sinkt anschließend auf etwa 385 V ab. Der Zwischenkreis 5 wird demnach nicht überlastet. Die zweite Soll-Trajektorie T ist somit bei elektrisch von dem Zwischenkreis 5 getrenntem Energiespeicher 4 besonders vorteilhaft.

Verglichen mit der Einstellung des Kurzschluss-Arbeitspunktes AP2 gemäß der ersten Soll-Trajektorie T wird für die Einstellung des Kurzschluss-Arbeitspunktes AP2 gemäß der zweiten Soll-Trajektorie T eine längere Zeitdauer benötigt. Wie aus Figur 5 ersichtlich ist, wird der Kurzschluss-Arbeitspunkt AP2 zu einem dritten Zeitpunkt t3 erreicht. Für das Einstellen des Kurzschluss-Arbeitspunktes AP2 werden dabei etwa 1,8 ms benötigt.

## Patentansprüche

1. Verfahren zum Betreiben einer elektrischen Maschine, die einen drehbar gelagerten Rotor und eine Motorwicklung aufweist, wobei die Motorwicklung durch eine Leistungselektronik (3) elektrisch mit einem elektrischen Energiespeicher (4) verbunden ist, wobei die Maschine (2) und/oder eine die Maschine (2) aufweisende Vorrichtung auf Fehlerfälle überwacht werden, und wobei die Motorwicklung bei Erfassen eines Fehlerfalls durch Ansteuern der Leistungselektronik (3) kurzgeschlossen wird, **dadurch gekennzeichnet, dass** eine Soll-Trajektorie (T) für einen Ist-Stromvektor (i_{Ist,dq}) eines durch die Motorwicklung fließenden elektrischen Motorstroms ermittelt wird, wobei die Soll-Trajektorie (T) von einem aktuellen Ist-Arbeitspunkt (AP1) der Maschine (2) zu einem Kurzschluss-Arbeitspunkt (AP2) der Maschine (2) verläuft, wobei in Abhängigkeit von der Soll-Trajektorie (T) eine Vorsteuerung prädiziert wird, und wobei die Leistungselektronik (3) zum Kurzschließen der Motorwicklung derart in Abhängigkeit von der Vorsteuerung angesteuert wird, dass ein Verlauf (V) des Ist-Stromvektors (i_{Ist,dq}) beim Kurzschließen der Motorwicklung zumindest im Wesentlichen der Soll-Trajektorie (T) entspricht.

2. Verfahren nach Anspruch 1, **dadurch gekennzeichnet, dass** die Soll-Trajektorie (T) in Abhängigkeit von dem aktuellen Ist-Arbeitspunkt (AP1) im Betrieb der elektrischen Maschine (2) ermittelt wird.

3. Verfahren nach Anspruch 1, **dadurch gekennzeichnet, dass** die Soll-Trajektorie (T) in Vorversuchen ermittelt wird.

4. Verfahren nach Anspruch 3, **dadurch gekennzeichnet, dass** für mehrere potentielle Ist-Arbeitspunkte (AP1) jeweils eine Soll-Trajektorie (T) ermittelt wird.

5. Verfahren nach einem der vorhergehenden Ansprüche, **dadurch gekennzeichnet, dass** die Soll-Trajektorie (T) in Abhängigkeit von einem Modell der elektrischen Maschine (2) ermittelt wird.

6. Verfahren nach einem der vorhergehenden Ansprüche, **dadurch gekennzeichnet, dass** ein Schwellen-Stromwert (SSW) vorgegeben wird, wobei die Soll-Trajektorie (T) derart in Abhängigkeit von dem Schwellen-Stromwert (SSW) ermittelt wird, dass ein Stromwert des Ist-Stromvektors (i_{Ist,dq}) beim Kurzschließen der Motorwicklung den Strom-Schwellenwert (SSW) stets unterschreitet.

7. Verfahren nach einem der vorhergehenden Ansprüche, **dadurch gekennzeichnet, dass** ein Schwellen-Spannungswert vorgegeben wird, wobei die Soll-Trajektorie (T) derart in Abhängigkeit von dem Schwellen-Spannungswert ermittelt wird, dass Spannungswerte von elektrischen Klemmenspannungen der Maschine (2) beim Kurzschließen der Motorwicklung den Schwellen-Spannungswert stets unterschreiten.

8. Verfahren nach einem der vorhergehenden Ansprüche, **dadurch gekennzeichnet, dass** die Soll-Trajektorie (T) in Abhängigkeit von einer Zwischenkreisspannung (U_{ZK}) eines Zwischenkreises (5) der Leistungselektronik (3) ermittelt wird.

9. Verfahren nach Anspruch 8, **dadurch gekennzeichnet, dass** eine Spannungsschwelle für die Zwischenkreisspannung (U_{ZK}) vorgegeben wird, wobei die Soll-Trajektorie (T) derart in Abhängigkeit von der Spannungsschwelle ermittelt wird, dass die Zwischenkreisspannung (U_{ZK}) beim Kurzschließen der Motorwicklung die Spannungsschwelle stets unterschreitet.

10. Verfahren nach einem der Ansprüche 8 und 9, **dadurch gekennzeichnet, dass** eine Soll-Spannung für die Zwischenkreisspannung (U_{ZK}) vorgegeben wird, wobei die Soll-Trajektorie (T) derart in Abhängigkeit von der Soll-Spannung ermittelt wird, dass die Zwischenkreisspannung (U_{ZK}) bei Erreichen des Kurzschluss-Arbeitspunktes (AP2) der Soll-Spannung entspricht.

11. Verfahren nach einem der vorhergehenden Ansprüche, **dadurch gekennzeichnet, dass** die Soll-Trajektorie (T) durch einen modellprädiktiven Regler (14) ermittelt wird.

12. Verfahren nach einem der vorhergehenden Ansprüche, **dadurch gekennzeichnet, dass** ein Sensorsignal eines Sensors mit einem vorgegebenen Grenzwert verglichen wird, und dass der Fehlerfall in Abhängigkeit von dem Vergleich erfasst wird.

13. Verfahren nach einem der vorhergehenden Ansprüche, **dadurch gekennzeichnet, dass** die elektrische Maschine (2) bei Erfassen des Fehlerfalls in Abhängigkeit von der Vorsteuerung in den Kurzschluss-Arbeitspunkt gesteuert wird.

14. Vorrichtung zum Betreiben einer elektrischen Maschine, wobei die Maschine (2) einen drehbar gelagerten Rotor und eine Motorwicklung aufweist, und wobei die Motorwicklung durch eine Leistungselektronik (3) elektrisch mit einem elektrischen Energiespeicher (4) verbunden ist, **gekennzeichnet durch** ein Steuergerät (10), insbesondere Mikrocontroller (10), das speziell dazu hergerichtet ist, bei bestimmungsgemäßem Gebrauch das Verfahren gemäß einem der vorhergehenden Ansprüche durchzuführen.

15. Elektrisches Antriebssystem, mit einer elektrischen Maschine (2), die einen drehbar gelagerten Rotor und eine Motorwicklung aufweist, wobei die Motorwicklung durch eine Leistungselektronik (3) elektrisch mit einem elektrischen Energiespeicher (4) verbunden ist, **gekennzeichnet durch** eine Vorrichtung (9) gemäß dem vorhergehenden Anspruch zum Betreiben der elektrischen Maschine (2).

## Claims

1. Method for operating an electric machine comprising a rotatably mounted rotor and a motor winding, wherein the motor winding is electrically connected to an electric energy store (4) by means of power electronics (3), wherein the machine (2) and/or a device comprising the machine (2) is/are monitored in respect of fault events, and wherein the motor winding is short-circuited by actuating the power electronics (3) upon detection of a fault event, **characterized in that** a target trajectory (T) for an actual current vector (i_{Ist,dq}) of an electric motor current flowing through the motor winding is ascertained, wherein the target trajectory (T) runs from a current actual operating point (AP1) of the machine (2) to a short-circuit operating point (AP2) of the machine (2), wherein a feedforward control action is predicted according to the target trajectory (T), and wherein the power electronics (3) are actuated to short-circuit the motor winding according to the feedforward control action in such a way that, when the motor winding is short-circuited, a curve (V) of the actual current vector (i_{Ist,dq}) at least substantially matches the target trajectory (T).

2. Method according to Claim 1, **characterized in that** the target trajectory (T) is ascertained according to the current actual operating point (AP1) during operation of the electric machine (2).

3. Method according to Claim 1, **characterized in that** the target trajectory (T) is ascertained in preliminary tests.

4. Method according to Claim 3, **characterized in that** a respective target trajectory (T) is ascertained for multiple potential actual operating points (AP1).

5. Method according to any one of the preceding claims, **characterized in that** the target trajectory (T) is ascertained according to a model of the electric machine (2).

6. Method according to any one of the preceding claims, **characterized in that** a threshold current value (SSW) is specified, wherein the target trajectory (T) is ascertained according to the threshold current value (SSW) in such a way that a current value of the actual current vector (i_{Ist,dq}) always undershoots the current threshold value (SSW) when the motor winding is short-circuited.

7. Method according to any one of the preceding claims, **characterized in that** a threshold voltage value is specified, wherein the target trajectory (T) is ascertained according to the threshold voltage value such that voltage values of electrical terminal voltages of the machine (2) always undershoot the threshold voltage value when the motor winding is short-circuited.

8. Method according to any one of the preceding claims, **characterized in that** the target trajectory (T) is ascertained according to a DC link voltage (U_{ZK}) of a DC link (5) of the power electronics (3).

9. Method according to Claim 8, **characterized in that** a voltage threshold for the DC link voltage (U_{ZK}) is specified, wherein the target trajectory (T) is ascertained according to the voltage threshold such that the DC link voltage (U_{ZK}) always undershoots the voltage threshold when the motor winding is short-circuited.

10. Method according to any one of Claims 8 and 9, **characterized in that** a target voltage for the DC link voltage (U_{ZK}) is specified, wherein the target trajectory (T) is ascertained according to the target voltage such that the DC link voltage (U_{ZK}) corresponds to the target voltage when the short-circuit operating point (AP2) is reached.

11. Method according to any one of the preceding claims, **characterized in that** the target trajectory (T) is ascertained by a model-predictive controller (14).

12. Method according to any one of the preceding claims, **characterized in that** a sensor signal of a sensor is compared with a predetermined limit value, and that the fault case is detected according to the comparison.

13. Method according to any one of the preceding claims, **characterized in that** the electric machine (2) is controlled at the short-circuit operating point according to the feedforward control action upon detection of the fault case.

14. Device for operating an electric machine, wherein the machine (2) has a rotatably mounted rotor and a motor winding, and wherein the motor winding is electrically connected to an electrical energy store (4) by power electronics (3), **characterized by** a control unit (10), in particular a microcontroller (10), which is specifically adapted to carry out the method according to any one of the preceding claims when used as intended.

15. Electric drive system, having an electric machine (2) comprising a rotatably mounted rotor and a motor winding, wherein the motor winding is electrically connected to an electrical energy store (4) by power electronics (3), **characterized by** a device (9) according to the preceding claim for operating the electric machine (2).

## Revendications

1. Procédé pour faire fonctionner une machine électrique qui comprend un rotor monté rotatif et un enroulement de moteur, l'enroulement de moteur étant relié électriquement à un accumulateur d'énergie électrique (4) par une électronique de puissance (3), la machine (2) et/ou un dispositif équipé de la machine (2) étant surveillés pour détecter des cas de défaillance, et l'enroulement de moteur étant court-circuité en cas de détection d'une défaillance, en commandant l'électronique de puissance (3), **caractérisé en ce qu'**une trajectoire de consigne (T) est déterminée pour un vecteur de courant réel (i_{Ist,dq}) d'un courant électrique de moteur circulant dans l'enroulement de moteur, la trajectoire de consigne (T) s'étendant d'un point de fonctionnement réel actuel (AP1) de la machine (2) à un point de fonctionnement de court-circuit (AP2) de la machine (2), une commande pilote étant prédite en fonction de la trajectoire de consigne (T), et l'électronique de puissance (3) étant commandée de façon à court-circuiter l'enroulement de moteur en fonction de la commande pilote de telle sorte qu'une évolution (V) du vecteur de courant réel (i_{Ist,dq}) lors du court-circuit de l'enroulement de moteur corresponde au moins sensiblement à la trajectoire de consigne (T).

2. Procédé selon la revendication 1, **caractérisé en ce que** la trajectoire de consigne (T) est déterminée en fonction du point de fonctionnement réel actuel (AP1) pendant le fonctionnement de la machine électrique (2).

3. Procédé selon la revendication 1, **caractérisé en ce que** la trajectoire de consigne (T) est déterminée lors d'essais préliminaires.

4. Procédé selon la revendication 3, **caractérisé en ce qu'**une trajectoire de consigne (T) est déterminée pour une pluralité de points de fonctionnement réels potentiels (AP1).

5. Procédé selon l'une des revendications précédentes, **caractérisé en ce que** la trajectoire de consigne (T) est déterminée en fonction d'un modèle de la machine électrique (2).

6. Procédé selon l'une des revendications précédentes, **caractérisé en ce qu'**une valeur de courant de seuil (SSW) est prédéfinie, la trajectoire de consigne (T) étant déterminée en fonction de la valeur de courant de seuil (SSW) de telle sorte qu'une valeur de courant du vecteur de courant réel (i_{Ist,dq}) soit toujours inférieure à la valeur de courant de seuil (SSW) en cas de court-circuit de l'enroulement de moteur.

7. Procédé selon l'une des revendications précédentes, **caractérisé en ce qu'**une valeur de tension de seuil est prédéfinie, la trajectoire de consigne (T) étant déterminée en fonction de la valeur de tension de seuil de telle sorte que les valeurs de tension des bornes électriques de la machine (2) soient toujours inférieures à la valeur de tension de seuil en cas de court-circuit de l'enroulement de moteur.

8. Procédé selon l'une des revendications précédentes, **caractérisé en ce que** la trajectoire de consigne (T) est déterminée en fonction d'une tension de circuit intermédiaire (U_{ZK}) d'un circuit intermédiaire (5) de l'électronique de puissance (3).

9. Procédé selon la revendication 8, **caractérisé en ce qu'**un seuil de tension est prédéfini pour la tension du circuit intermédiaire (U_{ZK}), la trajectoire de consigne (T) étant déterminée en fonction du seuil de tension de telle sorte que la tension du circuit intermédiaire (U_{ZK}) reste toujours inférieure au seuil de tension en cas de court-circuit de l'enroulement de moteur.

10. Procédé selon l'une des revendications 8 et 9, **caractérisé en ce qu'**une tension de consigne est prédéfinie pour la tension du circuit intermédiaire (U_{ZK}), la trajectoire de consigne (T) étant déterminée en fonction de la tension de consigne de telle sorte que la tension du circuit intermédiaire (U_{ZK}) corresponde à la tension de consigne lorsque le point de fonctionnement en court-circuit (AP2) est atteint.

11. Procédé selon l'une des revendications précédentes, **caractérisé en ce que** la trajectoire de consigne (T) est déterminée par un contrôleur prédictif de modèle (14).

12. Procédé selon l'une des revendications précédentes, **caractérisé en ce qu'**un signal d'un capteur est comparé à une valeur limite prédéfinie et **en ce que** le cas de défaillance est détecté en fonction de la comparaison.

13. Procédé selon l'une des revendications précédentes, **caractérisé en ce que** la machine électrique (2) est commandée jusqu'au point de fonctionnement en court-circuit en fonction de la commande pilote lors de la détection du cas de défaillance.

14. Dispositif pour faire fonctionner une machine électrique, la machine (2) comprenant un rotor monté de manière rotative et un enroulement de moteur, et l'enroulement de moteur étant relié électriquement à un accumulateur d'énergie électrique (4) par une électronique de puissance (3), **caractérisé par** un dispositif de commande (10), en particulier un microcontrôleur (10), qui est spécialement conçu pour mettre en œuvre le procédé selon l'une des revendications précédentes lorsqu'il est utilisé conformément à sa destination.

15. Système d'entraînement électrique, comprenant une machine électrique (2) qui comprend un rotor monté de manière rotative et un enroulement de moteur, l'enroulement de moteur étant relié électriquement à un accumulateur d'énergie électrique (4) par une électronique de puissance (3), **caractérisé par** un dispositif (9) selon la revendication précédente pour faire fonctionner la machine électrique (2).
